# DEMANDE DE BREVET EUROPEEN

(11) **EP 3 141 423 A1**
(43) Date de publication de la demande: **15.03.2017**
(21) Numéro de dépôt: 16186825.2
(22) Date de dépôt: 01.09.2016
(51) Int. Cl.: B60P 3/14, B60P 3/32, A61G 3/00

(54) **ENSEMBLE DE REMORQUE FORMANT UNE CLINIQUE SPORTIVE MOBILE**

(30) Priorité: 04.09.2015 FR 1558216
(71) Demandeur: 321 Perform SARL, 66120 Egat (FR)
(72) Inventeur: FEUILLEE, Xavier, 66120 EGAT (FR)
(74) Mandataire: Argyma

(57) **Abrégé**

La présente invention a pour objet un ensemble de remorque comprenant une remorque apte à être tractée par un camion, comprenant une pluralité d'espaces aménagés en vue de mettre à disposition d'une équipe d'utilisateurs des facilités dédiées à au moins un sportif de haut niveau, ladite pluralité d'espaces comprenant un espace (MASS1, MASS2) dédié à la récupération, comprenant au moins une table de massage, et un espace (BIO) dédié à la gestion des biorythmes. Ladite remorque comprend en outre au moins un espace dédié aux soins, comprenant une unité de soin cryogénique (CRYO), de telle sorte que ledit ensemble de remorque forme une clinique sportive mobile.

## Description

### DOMAINE TECHNIQUE ET OBJET DE L'INVENTION

La présente invention se situe dans le domaine de l'optimisation des performances de sportifs de haut niveau et concerne, plus précisément, la mise à disposition desdits sportifs de haut niveau et de leur staff des moyens efficaces destinés aux soins et au management, en mobilité, sur le lieu même de compétition.

A cette fin, en particulier, la présente invention concerne une clinique sportive mobile prévue pour être aménagée dans une remorque apte à être tractée par un camion.

### ETAT DE LA TECHNIQUE

Dans le domaine du sport de haut niveau, notamment le sport automobile, il est de plus en plus indispensable pour une écurie de disposer de sa propre base de vie mobile, d'un espace dédié à la détente, aux briefings, et d'un espace de soin, pour la préparation et la récupération des sportifs de haut niveau.

Tous ces éléments doivent bien entendu être à disposition sur le lieu des compétitions, qui peuvent se tenir aux quatre coins du monde, d'où la nécessité de disposer d'une telle base de vie mobile.

Dans ce contexte, il est connu d'aménager des remorques tractées par des camions. Couramment désignées sous l'appellation anglo-saxonne de « motor-homes », ces remorques aménagées sont amenées sur les sites de compétitions par de nombreuses équipes dans différents domaines sportifs de haut niveau. En particulier, ce type d'équipement est devenu la norme pour les écuries de sport automobile de haut niveau.

L'homme du métier connaît par conséquent des « motor-homes » aménagés, comprenant typiquement un espace dédié à la récupération, un espace pour l'ingénierie ou encore un espace dédié aux briefings. De telles « motor-homes » visent par exemple à apporter à des pilotes automobiles, directement sur le paddock, là où se tient une compétition, des espaces de détente et de récupération, installés dans une remorque apte à être tractée par un camion.

Les « motor-homes » existant sont cependant limitées dans leur agencement et ne sont pas en mesure de fournir aux utilisateurs certaines fonctions. En particulier, les « motor-homes » connues ne permettent pas de disposer d'équipements ni d'espaces dédiés aux soins cliniques ni à la récupération active des sportifs de haut niveau.

Il existe donc un besoin pour une clinique mobile sportive, de type « motor-home », aménagée dans une remorque apte à être tractée par un camion, destinée à être installée sur des lieux de compétition dans le but d'assurer la fourniture, en mobilité, pour des sportifs de haut niveau, d'espaces dédiés à la détente, aux briefings, à la récupération, mais aussi et surtout aux soins cliniques, à la récupération active, ainsi qu'aux échauffements et à l'optimisation physique et mentale.

### PRESENTATION GENERALE DE L'INVENTION

A cet effet, plus précisément, la présente invention concerne un ensemble de remorque comprenant une remorque apte à être tractée par un camion, comprenant une pluralité d'espaces aménagés en vue de mettre à disposition d'une équipe d'utilisateurs des facilités dédiées à au moins un sportif de haut niveau, ladite pluralité d'espaces comprenant un espace dédié à la récupération, comprenant au moins une table de massage, et un espace dédié à la gestion des biorythmes. Selon l'invention, ladite remorque comprend en outre au moins un espace dédié aux soins, comprenant une unité de soin cryogénique, de telle sorte que ledit ensemble de remorque forme une clinique sportive mobile, et un espace dédié à l'échauffement cardiovasculaire dudit au moins un sportif de haut niveau et/ou un espace dédié à l'échauffement des fonctions cognitives dudit au moins un sportif de haut niveau.

L'ensemble de remorque selon l'invention présente ainsi l'avantage de constituer une clinique sportive mobile comprenant à la fois des équipements de soin de haut niveau, telle qu'une unité de soin cryogénique, et des espaces dédiés à la préparation et à l'échauffement de sportifs de haut niveau en vue d'une compétition, tel qu'un espace dédié à l'échauffement cardio-vasculaire ou un espace dédié à l'échauffement des grandes fonctions cognitives.

Avantageusement, ladite remorque comprend par ailleurs un espace médicalisé, dédié à la fourniture de soins médicaux.

Avantageusement, ladite remorque comprend par ailleurs un espace dédié à l'échauffement musculaire dudit au moins un sportif de haut niveau.

Avantageusement, ladite remorque comprend par ailleurs un espace dédié à la pressothérapie destiné audit sportif de haut niveau.

Avantageusement, ladite remorque comprend par ailleurs un espace dédié à la gestion de la nutrition.

Avantageusement, ladite remorque comprend par ailleurs un espace dédié à l'échauffement de l'adresse et de la coordination des gestes, comprenant des moyens de simulation comportant des reproductions de commandes de pilotage d'un véhicule automobile de courses.

Avantageusement, l'espace dédié aux soins comprend par ailleurs un sauna à infrarouge.

Avantageusement, l'ensemble de remorque selon l'invention comprend par ailleurs une tente accolée à ladite remorque et comprenant un espace aménagé supplémentaire.

### DESCRIPTION DES FIGURES

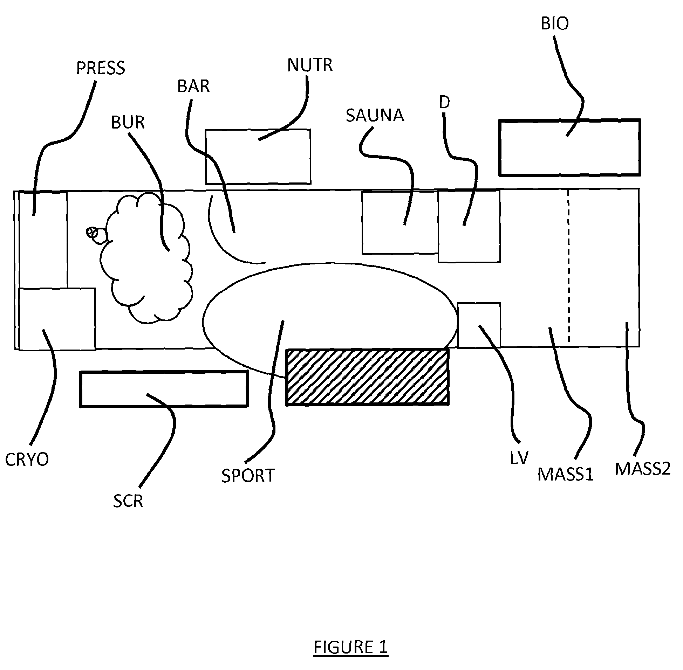

L'invention sera mieux comprise à la lecture de la description qui va suivre, donnée uniquement à titre d'exemple, et se référant à la figure 1 annexée qui représente un schéma d'un exemple d'ensemble de remorque selon l'invention, comprenant une pluralité d'espaces aménagés dédiés en particulier aux soins, destinés à au moins un sportif de haut niveau.

### DESCRIPTION DETAILLEE DE L'INVENTION

Il est à noter que la présente description est centrée sur le mode de réalisation représenté à la figure 1. Cependant, d'autres agencements de l'ensemble de remorque selon l'invention sont également visés par la présente invention, dès lors que, destiné à la préparation et à l'entretien d'au moins un sportif de haut niveau, ledit ensemble comprend, aménagé dans une remorque apte à être tractée par un camion, différents espaces dédiés notamment à la récupération, à la préparation, et surtout aux soins d'au moins un sportif de haut niveau.

En référence à la figure 1, l'ensemble de remorque selon l'invention, dans le mode de réalisation présenté à la figure 1, comprend une remorque présentant une pluralité d'espaces aménagés.

Lesdits espaces aménagés présentent en particulier :
- un espace SPORT, dédié à l'échauffement cardiovasculaire d'au moins un sportif de haut niveau et à son échauffement musculaire. Cet espace SPORT comprend typiquement un vélo, un rameur et tout équipement de sport ou de musculation adapté ;
- au moins un espace dédié au massage, MASS1, MASS2, comprenant typiquement trois lits et tables de massages dudit au moins un sportif de haut niveau et/ou pour la réalisation de soins ostéopathiques.

De façon avantageuse, selon l'invention, la remorque comprend en outre au moins un espace CRYO, SAUNA, dédié aux soins, avec notamment une unité de soin cryogénique CRYO. La présence d'un tel équipement cryothérapeutique présente l'avantage de permettre une récupération accélérée du sportif de haut niveau, en mobilité, sur le lieu d'une compétition, grâce à l'emport dudit équipement dans une remorque de type « motor-home », conformément à la présente invention, permettant audit sportif de haut niveau de disposer d'une clinique sportive mobile.

En outre, l'espace dédié aux soins peut également comprendre un sauna à infrarouge SAUNA, permettant d'optimiser encore la récupération dudit sportif de haut niveau.

L'espace dédié aux soins peut également comprendre, seulement un mode de réalisation, au moins un appareil de soin par ultra-son et/ou au moins un appareil de soin par onde de choc.

En outre, comme représenté à la figure 1, d'autres espaces aménagés peuvent tout à fait être intégrés à un tel ensemble de remorque selon l'invention, notamment :
- au moins un lit, par exemple deux lits superposés, et des moyens complémentaires (réveils, etc.), pour assurer la gestion des biorythmes du sportif de haut niveau : éveil, endormissement, programmation des moments où le cerveau doit être très éveillé, etc., au sein d'un espace BIO dédié à la gestion des biorythmes. La gestion du sommeil est notamment fondée sur une micro-nutrition adaptée, sur de la luminothérapie, et sur une étude longue du biorythme du sportif de haut niveau afin d'établir son « profil » en terme de biorythme ;
- un espace pressothérapie PRESS, visant à la mise en oeuvre, destinée au sportif de haut niveau, d'une méthode d'activation de la circulation veineuse et de la circulation lymphatique, au moyen de l'application d'un drainage mécanique et/ou pneumatique, notamment sur le bas du corps, afin d'améliorer la circulation sanguine chez ledit sportif ;

- un espace NUTR dédié à la nutrition, comprenant des moyens de stockage de boissons énergisantes ou dédiées à la récupération, ainsi que des casiers ;
- au moins un bureau BUR ;
- au moins un écran SCR ;
- un espace minibar ou cuisine BAR ;
- d'autres commodités pratiques, tels qu'un lave-linge LV, un sèche-linge, ou encore un espace dédié à l'hygiène D comprenant une douche et des toilettes.

Bien que non représentés spécifiquement sur le schéma de la figure 1, d'autres espaces aménagés peuvent tout à fait être intégrés à un tel ensemble de remorque, notamment :
- un espace dédié à l'échauffement des fonctions cognitives, dont la réactivité, la mémoire, la vitesse d'analyse, la concentration, et de la vision, etc. au moyen de machines et de procédures spécifiques ;
- un espace dédié à l'échauffement de l'adresse, de la coordination des gestes, et des sensations. Dans cet espace, les commandes de pilotage d'un véhicule peuvent être reproduites à destination du pilote de haut niveau se préparant à une course. Par l'intermédiaire de moyens spécifiques, notamment de simulation, ledit pilote peut être préparé aux problématiques d'adhérence, de maitrise des commandes de pilotage, de variation de vitesse, d'évaluation des distances et des trajectoires, etc. ;
- un espace médicalisé, dédié aux soins médicaux destinés au sportif de haut niveau, comprenant d'autres équipements médicaux ou paramédicaux ;
- un espace dédié au coaching mental, pour améliorer la gestion des émotions ou encore la combativité du sportif de haut niveau.

La clinique sportive mobile, aménagée dans une remorque, selon l'invention, présente ainsi l'avantage de constituer à la fois, à l'attention de sportifs de haut niveau, un lieu de vie, destiné à la détente et à la convivialité, un lieu de récupération physique et mentale, disposant d'équipements médicaux, de balnéothérapie et/ou de cryothérapie notamment, et un lieu permettant l'échauffement desdits sportifs de haut niveau, en vue de tendre vers un pic de performance, sur les plans physique, perceptif, mental, cognitif, nutritif, dans l'optique d'une activité compétitive imminente, sur le lieu même de la compétition.

Au-delà du matériel de kinésithérapie, la clinique sportive mobile selon l'invention comporte des équipements médicaux de haut niveau, dont une unité de soin cryogénique (CRYO).

En outre, par l'utilisation de machines dédiées, et de procédures spécifiques, les sportifs de haut niveau sont amenés dans un état leur permettant d'atteindre un pic de performance en vue de l'activité compétitive imminente. L'attention sélective, l'attention partagée, la vitesse et la consistance attentionnelle, l'inhibition comportementale, la capacité de discrimination, la mémoire de travail, la réactivité, les qualités visuelles et la perception de l'adhérence, pour des pilotes automobiles en particulier, sont optimisées par la combinaison du recours à des machines et à des procédures spécifiques, au sein de la clinique sportive mobile.

En particulier, l'alternance de périodes dans l'unité de soin cryogénique (CRYO) et hors de ladite unité de soin cryogénique (CRYO) favorise l'optimisation de l'attention.

Selon un mode de réalisation, la clinique sportive mobile comprend une machine émettant des lumières de différentes couleurs, pour travailler l'attention sélective des sportifs de haut niveau.

Selon un mode de réalisation, la clinique sportive mobile comprend une machine permettant de travailler l'attention et les réflexes des sportifs de haut niveau au moyen de stimuli visuels et auditifs.

Par ailleurs, selon un mode de réalisation, l'ensemble de remorque selon l'invention comprend également une tente accolée à la remorque, ladite tente abritant un espace aménagé supplémentaire.

En résumé, la présente invention est relative à un « motor-home » amélioré, consistant en un ensemble de remorque comprenant une remorque aménagée, formant une clinique sportive mobile. L'ensemble de remorque selon l'invention est aménagé en espaces dédiés à l'optimisation des performances d'au moins un sportif de haut niveau, lesdits espaces dédiés comprenant en particulier un espace dédié aux soins, comportant notamment une unité de soin cryogénique (CRYO).

Selon le mode de réalisation préféré, la clinique sportive mobile selon l'invention intègre à la fois un espace dédié aux soins, un espace dédié à la détente et un espace dédié à l'échauffement des grandes fonctions cognitives de sportifs de haut niveau, afin de les amener à un pic de performance, dans l'optique d'une activité compétitive imminente.

L'aménagement de la remorque est optimisé et orienté spécifiquement pour une discipline sportive donnée, notamment, selon un mode de réalisation préféré, un sport mécanique.

## Revendications

1. Ensemble de remorque comprenant une remorque apte à être tractée par un camion, comprenant une pluralité d'espaces aménagés en vue de mettre à disposition d'une équipe d'utilisateurs des facilités dédiées à au moins un sportif de haut niveau, ladite pluralité d'espaces comprenant un espace dédié à la récupération (MASS1, MASS2), comprenant au moins une table de massage, et un espace dédié à la gestion des biorythmes (BIO), **caractérisé en ce que** ladite remorque comprend en outre au moins un espace dédié aux soins, comprenant une unité de soin cryogénique (CRYO), de telle sorte que ledit ensemble de remorque forme une clinique sportive mobile, et un espace (SPORT) dédié à l'échauffement cardiovasculaire dudit au moins un sportif de haut niveau et/ou un espace dédié à l'échauffement des fonctions cognitives dudit au moins un sportif de haut niveau.

2. Ensemble de remorque selon la revendication 1, **caractérisé en ce que** ladite remorque comprend par ailleurs un espace médicalisé, dédié à la fourniture de soins médicaux.

3. Ensemble de remorque selon l'une quelconque des revendications précédentes, **caractérisé en ce que** ladite remorque comprend par ailleurs un espace (SPORT) dédié à l'échauffement musculaire dudit au moins un sportif de haut niveau.

4. Ensemble de remorque selon l'une quelconque des revendications précédentes, **caractérisé en ce que** ladite remorque comprend par ailleurs un espace (PRESS) dédié à la pressothérapie destiné audit sportif de haut niveau.

5. Ensemble de remorque selon l'une quelconque des revendications précédentes, **caractérisé en ce que** ladite remorque comprend par ailleurs un espace (NUTR) dédié à la gestion de la nutrition.

6. Ensemble de remorque selon l'une quelconque des revendications précédentes, **caractérisé en ce que** ladite remorque comprend par ailleurs un espace dédié à l'échauffement de l'adresse et de la coordination des gestes, comprenant des moyens de simulation comportant des reproductions de commandes de pilotage d'un véhicule automobile de courses.

7. Ensemble de remorque selon l'une quelconque des revendications précédentes, **caractérisé en ce que** l'espace dédié aux soins comprend par ailleurs un sauna à infrarouge (SAUNA).

8. Ensemble de remorque selon l'une quelconque des revendications précédentes, **caractérisé en ce qu'**il comprend par ailleurs une tente accolée à ladite remorque et comprenant un espace aménagé supplémentaire.
